# FASCICULE DE BREVET EUROPEEN

(11) **EP 3 468 096 B1**
(45) Date de publication et mention de la délivrance du brevet: **02.06.2021**
(21) Numéro de dépôt: 18198470.9
(22) Date de dépôt: 03.10.2018
(51) Int. Cl.: H04L 9/32

(54) **PROCÉDÉ DE VÉRIFICATION D'UNE AUTHENTIFICATION BIOMÉTRIQUE**
ÜBERPRÜFUNGSVERFAHREN EINER BIOMETRISCHEN AUTHENTIFIZIERUNG
METHOD FOR VERIFYING A BIOMETRIC AUTHENTICATION

(30) Priorité: 04.10.2017 FR 1759292
(43) Date de publication de la demande: 10.04.2019
(73) Titulaire: Idemia Identity & Security France, 92400 Courbevoie (FR)
(72) Inventeur: KEUFFER, Julien, Paul, 92130 Issy-Les-Moulineaux (FR); CHABANNE, Hervé, 92130 Issy-Les-Moulineaux (FR)
(74) Mandataire: Regimbeau

(56) Documents cités:
- CHABANNE HERVE ET AL: "A Verifiable System for Automated Face Identification", 2016 INTERNATIONAL CONFERENCE OF THE BIOMETRICS SPECIAL INTEREST GROUP (BIOSIG), GESELLSCHAFT FUER INFORMATIK, 21 septembre 2016 (2016-09-21), pages 1-5, XP032995276, DOI: 10.1109/BIOSIG.2016.7736907
- CHABANNE HERVÉ ET AL: "Delegating Biometric Authentication with the Sumcheck Protocol", 17 septembre 2016 (2016-09-17), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047355453, ISSN: 0302-9743 ISBN: 978-3-642-38287-1 [extrait le 2016-09-17] * sections 2 et 3 *
- Rima Belguechi ET AL: "An Overview on Privacy Preserving Biometrics" In: "Recent Application in Biometrics", 1 janvier 2011 (2011-01-01), INTECH, XP055488527, pages 65-84, * section 3.3 *

## Description

### DOMAINE DE L'INVENTION

L'invention concerne un procédé de traitement de données biométriques, comprenant la comparaison entre une donnée biométrique candidate et au moins une donnée biométrique de référence.

L'invention s'applique notamment à la vérification d'une authentification biométrique mise en oeuvre par un dispositif personnel d'un individu et non par une unité de traitement considérée digne de confiance comme une unité de traitement gouvernementale.

### ETAT DE LA TECHNIQUE

On connaît déjà des schémas d'identification ou d'authentification dans lesquels un utilisateur présente à une unité de traitement digne de confiance, par exemple à une unité appartenant à une douane, une donnée biométrique que l'unité confronte à une ou plusieurs donnée(s) biométrique(s) de référence enregistrée(s) soit dans un document d'identité de l'utilisateur, soit dans une base de données à laquelle elle a accès.

Ce scénario présente l'avantage que le résultat de la comparaison entre les données biométriques est réputé fiable car la comparaison est mise en oeuvre par une unité de confiance. Cependant, l'étape d'identification ou d'authentification, comprenant l'acquisition d'une donnée biométrique fraîche sur l'utilisateur, peut durer un temps important et occasionner la création de files d'attentes. C'est le cas par exemple lors du franchissement d'une douane, où une authentification contre une donnée biométrique contenue dans un passeport d'un individu est mise en oeuvre.

Pour éviter ce type de désagrément, on pourrait envisager un scénario alternatif dans lequel l'utilisateur s'authentifierait ou s'identifierait à l'aide d'un dispositif électronique qui lui est personnel, tel qu'un téléphone mobile, et fournirait seulement à l'unité de traitement en charge du contrôle le résultat de cette authentification ou identification.

Dans ce cas, le problème se pose néanmoins de la fiabilité du résultat de l'authentification ou de l'identification, et notamment du résultat de la comparaison entre les données biométriques qui a permis à l'utilisateur de s'authentifier ou de s'identifier. Il est en effet nécessaire de proposer un moyen pour que l'unité de traitement en charge du contrôle puisse vérifier que le résultat est correct et que l'utilisateur n'a pas réalisé de fraude ou d'erreur dans la mise en oeuvre de la comparaison des données biométriques.

Il a ainsi été proposé dans la demande FR1653890 de laisser un utilisateur réaliser avec un dispositif électronique personnel une authentification ou une identification biométrique, et de permettre à une entité de vérification de vérifier l'exactitude du calcul de distance entre les données biométriques ayant permis cette authentification ou identification grâce à un procédé de preuve de type SumCheck.

Une telle solution apporte satisfaction, mais elle pourrait encore être améliorée, car le procédé de preuve est interactif et nécessite des échanges de données multiples entre le dispositif électronique personnel et l'entité de vérification, et prend donc encore du temps.

Une solution serait de fournir tout ou partie des données biométriques à l'entité de vérification, mais cela n'est pas acceptable pour des questions de respect de la vie privée. FR1653890 propose de régler ce problème en mettant en oeuvre un « masquage » des données biométriques, mais un tel traitement consomme à nouveau du temps et de la ressource informatique.

Il serait par conséquent souhaitable de disposer d'un nouveau procédé de traitement de données biométriques pour l'authentification déléguant le calcul à un équipement personnel de l'utilisateur, qui soit totalement fiable, rapide, efficace, tout en protégeant complètement la vie privée de l'utilisateur.

### PRESENTATION DE L'INVENTION

Selon un premier aspect, l'invention concerne un procédé de traitement de données biométriques mis en oeuvre par une entité de preuve et une entité de vérification connectées ;
l'entité de preuve disposant d'une donnée biométrique candidate, d'une donnée biométrique de référence, d'une empreinte cryptographique de la donnée biométrique de référence, d'une empreinte cryptographique de la donnée biométrique candidate ; l'entité de vérification disposant seulement de l'empreinte cryptographique de la donnée biométrique candidate ;
le procédé comprenant des étapes de :
(a) génération par les moyens de traitement de données de l'entité de preuve d'une preuve à divulgation nulle de connaissances du fait que la donnée biométrique candidate et la donnée biométrique de référence coïncident ;
(b) transmission à l'entité de vérification de ladite preuve à divulgation nulle de connaissance, de l'empreinte cryptographique de la donnée biométrique candidate, et de l'empreinte cryptographique de la donnée biométrique de référence ;
(c) vérification par les moyens de traitement de données de l'entité de vérification que la preuve à divulgation nulle de connaissance est valide, et que l'empreinte cryptographique reçue de la donnée biométrique candidate correspond à celle dont dispose l'entité de vérification.

Grâce à l'utilisation astucieuse d'une preuve à divulgation nulle de connaissance, il est possible de déporter l'essentiel du calcul sur les terminaux personnels des utilisateurs, tout en ne donnant qu'un rôle de vérifieur aux équipements en charge du contrôle, rôle qui ne nécessite pas la connaissance des données biométriques, mais seulement de leurs empreintes cryptographiques.

Il n'est donc plus nécessaire de transmettre sous quelque forme que soit les données biométriques et le respect de la vie privée de l'utilisateur est donc total.

Selon d'autres caractéristiques avantageuses et non limitatives :
- l'entité de preuve ne dispose initialement que de la donnée biométrique de référence et de l'empreinte cryptographique de la donnée biométrique de référence, le procédé comprenant la mise en oeuvre par des moyens de traitement de données d'une entité de confiance d'une étape préalable (a1) de :
   ∘ génération de la donnée biométrique candidate à partir d'un trait biométrique fourni par des moyens d'acquisition biométrique de l'entité de confiance ;
   ∘ génération de l'empreinte cryptographique de la donnée biométrique candidate obtenue ; et
   ∘ transmission :
      ▪ à l'entité de preuve, d'au moins la donnée biométrique candidate obtenue ; et
      ▪ à l'entité de vérification, de l'empreinte cryptographique générée de la donnée biométrique candidate.
- Le procédé comprend une étape (d) d'ouverture d'une porte disposée à une extrémité d'un couloir, les moyens d'acquisition biométrique de l'entité de confiance étant disposés à l'autre extrémité du couloir, de sorte que les étapes (a) et (b) soient mises en oeuvre pendant le parcours du couloir par l'utilisateur de l'entité de preuve ;
- l'entité de preuve dispose également d'une signature électronique de la donnée biométrique de référence par une entité d'autorité, l'étape (b) comprenant en outre la transmission à l'entité de vérification de la signature de la donnée biométrique de référence, et l'étape (c) comprenant en outre la vérification que la signature de la donnée biométrique de référence est valide ;
- le procédé comprend une étape encore antérieure (a0) de :
   ∘ génération par les moyens de traitement de données de l'entité de preuve de la donnée biométrique de référence à partir d'un trait biométrique de référence associé à un document officiel ; et de l'empreinte cryptographique de la donnée biométrique de référence ;
   ∘ obtention de la signature de la donnée biométrique de référence.
- l'obtention de la signature de la donnée biométrique de référence à l'étape (a0) comprend la transmission à l'entité d'autorité du document officiel, de la donnée biométrique de référence, et de l'empreinte cryptographique de la donnée biométrique de référence, et la réception en retour de la signature de la donnée biométrique de référence générée par l'entité d'autorité à partir de l'empreinte cryptographique de la donnée biométrique de référence, après vérification ;
- la preuve à divulgation nulle de connaissances est un objet cryptographique de type zkSNARK;
- l'étape (a) comprend la vérification préalable que la donnée biométrique candidate et la donnée biométrique de référence coïncident ;
- la donnée biométrique candidate et la donnée biométrique de référence coïncident si leur distance selon une fonction de comparaison donnée est inférieure à un seuil prédéterminé ;
- ladite preuve à divulgation nulle de connaissances du fait que la donnée biométrique candidate et la donnée biométrique de référence coïncident est une preuve à divulgation nulle de connaissances du fait qu'étant données deux empreintes cryptographiques, il existe une donnée biométrique candidate et une donnée biométrique de référence ayant pour empreintes cryptographiques respectives les empreintes cryptographiques données, telles que leur distance selon la fonction de comparaison donnée est inférieure au seuil prédéterminé ;
- l'entité de preuve est un dispositif électronique personnel à l'individu de type téléphone, ordinateur personnel ou tablette numérique.

Selon un deuxième aspect est proposé un ensemble de traitement de données biométriques comprenant une entité de preuve et une entité de vérification connectées, caractérisé en ce que :
∘ l'entité de preuve comprend des moyens de traitement de données configurés pour générer une preuve à divulgation nulle de connaissances du fait qu'une donnée biométrique candidate et une donnée biométrique de référence coïncident, et transmettre à l'entité de vérification ladite preuve à divulgation nulle de connaissance, une empreinte cryptographique de la donnée biométrique candidate, et une empreinte cryptographique de la donnée biométrique de référence ;
∘ l'entité de vérification comprend des moyens de traitement de données configurés pour vérifier que la preuve à divulgation nulle de connaissance est valide, et que l'empreinte cryptographique reçue de la donnée biométrique candidate correspond à une dont dispose l'entité de vérification.

Selon d'autres caractéristiques avantageuses et non limitatives :
- l'ensemble comprend en outre une entité de confiance comprenant des moyens d'acquisition biométrique et des moyens de traitement de données configurés pour :
   ∘ générer la donnée biométrique candidate à partir d'un trait biométrique fourni par les moyens d'acquisition biométrique et l'empreinte cryptographique de la donnée biométrique candidate obtenue ;
   ∘ transmettre :
      ▪ à l'entité de preuve, au moins la donnée biométrique candidate obtenue ; et
      ▪ à l'entité de vérification, l'empreinte cryptographique générée de la donnée biométrique candidate.
- L'ensemble comprend en outre une entité d'autorité comprenant des moyens de traitement de données configurés pour signer sur requête de l'entité de preuve l'empreinte cryptographique de la donnée biométrique de référence.

Selon un troisième et un quatrième aspect, l'invention propose un produit programme d'ordinateur comprenant des instructions de code pour l'exécution d'un procédé selon le premier aspect de traitement de données biométriques ; et un moyen de stockage lisible par un équipement informatique sur lequel un produit programme d'ordinateur comprend des instructions de code pour l'exécution d'un procédé selon le premier aspect de traitement de données biométriques.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1 représente schématiquement un système pour la mise en oeuvre du procédé selon l'invention,
- La figure 2 représente schématiquement un mode de réalisation préféré de système pour la mise en œuvre du procédé selon l'invention.

### DESCRIPTION DETAILLEE D'AU MOINS UN MODE DE REALISATION DE L'INVENTION

### Architecture

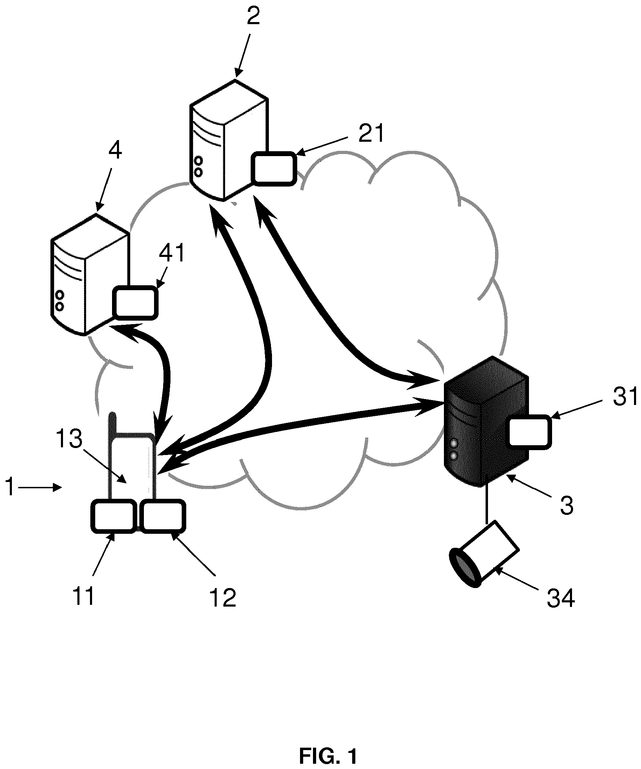

En référence à la **figure 1****,** on a représenté schématiquement un système pour l'authentification biométrique d'individus permettant une vérification du résultat de l'authentification.

Ce système comprend au moins deux équipements 1, 2. Le premier équipement 1 est un équipement personnel à un individu, comme par exemple son téléphone mobile, comme expliqué ci-après. Le deuxième équipement 2 est détenu et contrôlé par une entité auprès de qui l'authentification doit être effectuée, par exemple une entité gouvernementale, douanière, une société, etc. Dans la suite de la présente description on prendra l'exemple d'un aéroport.

L'un des équipements met en œuvre une identification sur des données biométriques, et fournit ensuite le résultat à l'autre, qui procède à la vérification de ce résultat. A ce titre, selon un schéma connu, le premier équipement 1 est une entité, dite de preuve, qui met en œuvre l'authentification et fournit le résultat au deuxième équipement 2 qui vérifie ce résultat, dit entité de vérification.

Le premier équipement 1 comporte des moyens de traitement de données 11, i.e. un calculateur tel que par exemple un processeur, un microprocesseur, un contrôleur, un microcontrôleur, un FPGA etc. Ce calculateur est adapté pour exécuter des instructions de code pour mettre en œuvre le procédé ci-après.

Le premier équipement 1 comprend avantageusement une interface de communication lui permettant de dialoguer à distance avec le deuxième équipement 2 et d'autres équipements tel qu'un troisième équipement 3 qui est entité dite de confiance (fourni par un tiers reconnu par l'entité auprès de qui l'authentification doit être effectuée tel que l'aéroport, par exemple un fournisseur de solution de sécurité), et un quatrième équipement 4 qui est une entité dite d'autorité (par exemple gouvernementale). A noter que l'entité de vérification 2 et l'entité d'autorité 4 peuvent être confondues.

Le premier équipement peut également comprendre des moyens de stockage de données 12 (une mémoire, par exemple flash) une interface utilisateur 13 (typiquement un écran tactile), et éventuellement des moyens d'acquisition biométrique 14 (voir plus loin).

Cette interface de communication est de préférence la combinaison d'une interface de communication sans fil, par exemple de type Wifi ou Bluetooth ou réseau de téléphonie mobile (GPRS, 3G, 4G ou autre) et de tout autre réseau de communication aval.

Le deuxième équipement 2 (et le cas échéant le troisième et/ou le quatrième équipement(s) 3, 4) comporte quant à lui également des moyens de traitement de données 21 (respectivement 31, 41), i.e. un calculateur tel que par exemple un processeur, un microprocesseur, un contrôleur, un microcontrôleur, un FPGA etc. Ce calculateur est adapté pour exécuter des instructions de code pour mettre en oeuvre le procédé ci-après.

Ces autres équipements 2, 3, 4 comprennent avantageusement eux aussi des interfaces de communication leur permettant de dialoguer à distance entre eux et avec le premier équipement 1.

Le deuxième équipement 2 et le troisième équipement 3 sont typiquement disposés à proximité (par exemple tous les deux dans l'aéroport, on verra plus loin des architectures possibles), et peuvent être à ce titre connectés filialement. Le quatrième équipement 4 est quant à lui typiquement un équipement distant.

De façon préférée, le premier équipement 1 et l'éventuel troisième équipement 3 sont capables de générer une donnée biométrique à partir d'un trait biométrique d'un individu. Le trait biométrique peut par exemple être la forme du visage, ou un ou plusieurs iris de l'individu. L'extraction de la donnée biométrique est mise en oeuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction de points particuliers ou d'une forme du visage dans le cas où l'image est une image du visage de l'individu.

Le troisième équipement 3 et éventuellement le premier équipement 1 comprennent à ce titre des moyens d'acquisition biométrique 14, 34, typiquement un capteur d'image, par exemple un appareil photographique numérique ou une caméra numérique, adapté pour acquérir au moins une image d'un trait biométrique d'un individu.

Comme l'on verra, le fait que l'entité de confiance et l'entité de vérification prennent la forme d'équipements indépendants 2, 3 vise à prévenir que l'entité de vérification dispose des données biométriques, de sorte à garantir la vie privée des utilisateurs.

Dans un mode de réalisation, l'équipement 1 met en oeuvre une authentification de l'individu, c'est-à-dire compare une donnée biométrique dite candidate, car fraichement acquise sur l'individu, à une seule biométrique dite de référence, censée provenir du même individu, afin de vérifier que l'individu à partir duquel ont été obtenues les deux données est bien le même.

Dans ce cas, la donnée biométrique de référence utilisée pour l'authentification est avantageusement une donnée enregistrée dans un document d'identité de l'individu. Par exemple, la donnée biométrique peut être une image du visage figurant sur un document d'identité, ou encore une image du visage ou d'au moins un iris de l'individu enregistré dans une puce radiofréquence contenue dans le document.

Très avantageusement, le premier équipement 1 décrit ci-avant est un dispositif électronique personnel à l'individu, par exemple un téléphone mobile ou « smartphone », une tablette électronique ou encore un ordinateur personnel.

Ceci permet à un individu de réaliser lui-même une authentification avant d'en présenter le résultat au deuxième équipement 2. Ainsi l'étape chronophage d'authentification comprenant l'acquisition d'une donnée biométrique fraîche sur l'individu et sa comparaison avec une ou plusieurs données de référence est déportée en amont d'un contrôle par le deuxième équipement 2.

Un cas d'application est le franchissement d'une douane par un individu typiquement à l'atterrissage d'un avion. Celui-ci peut utiliser son dispositif électronique personnel pour réaliser une authentification biométrique contre son passeport avant le franchissement de la douane. Puis, au moment de ce franchissement de la douane, l'individu fournit le résultat au deuxième équipement 2 agissant en tant qu'entité de vérification (qui est contrôlée par exemple par l'aéroport) au moyen de son dispositif personnel 1. L'entité de vérification ne procède alors qu'à la vérification. Ceci réduit le temps de franchissement de la douane et donc les files d'attente pouvant être occasionnées.

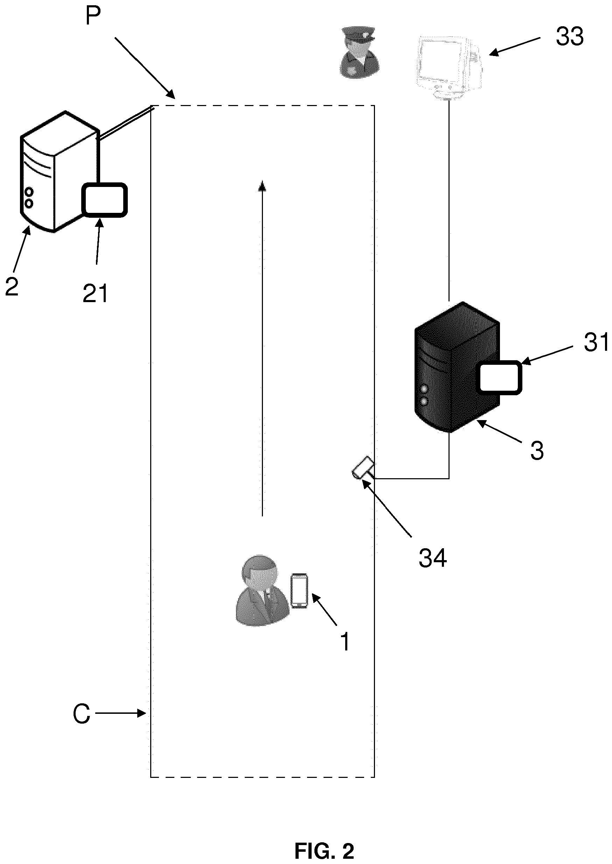

Selon un mode de réalisation particulièrement préféré représenté par la **figure 2****,** le procédé vise à l'ouverture automatique d'une porte P à une extrémité d'un couloir C. Les moyens d'acquisition biométrique 34 du troisième équipement (l'entité de confiance) sont alors disposés à l'autre extrémité du couloir C. A la première extrémité du couloir C (au niveau de la porte), on peut trouver une interface homme machine 33 pour opération par un personnel de sécurité (qui in fine est responsable du franchissement de la porte P).

Comme l'on verra cela permet que les traitements de données (durée de quelques secondes à quelques dizaines de secondes) soient mis en oeuvre pendant la durée du parcours du couloir de sorte qu'une fois arrivé à la porte P celle-ci s'ouvre directement si l'authentification est concluante, sans que l'utilisateur n'ait à attendre. On prendra pour cela un couloir de quelques mètres à quelques dizaines de mètres (en prenant 1m/s un ordre de grandeur de la vitesse moyenne d'un individu marchant dans le couloir). A noter qu'on peut prévoir un tapis roulant dans le couloir C de sorte à contrôler précisément le temps de parcours.

### Enrôlement

Comme expliqué, le présent procédé vise à ce que le second équipement 2 (l'entité de vérification) n'ait besoin que de se voir présenter une preuve de l'authentification de l'individu, mais pas de données biométriques.

Ainsi, le prédicat de base est qu'au lancement du procédé l'entité de preuve (le premier équipement 1) dispose d'une donnée biométrique candidate, d'une donnée biométrique de référence, d'une empreinte cryptographique de la donnée biométrique de référence, d'une empreinte cryptographique de la donnée biométrique candidate, et que l'entité de vérification (le deuxième équipement 2) dispose seulement de l'empreinte cryptographique de la donnée biométrique candidate.

Par « empreinte cryptographique » d'une donnée biométrique (appelé également « condensat » ou « haché » de la donnée, de l'anglais « hash »), obtenue en appliquant une fonction de hachage cryptographique à la donnée (typiquement des familles SHA-1 ou SHA-2, en particulier SHA-256). L'empreinte a une taille fixe et ne révèle rien sur la donnée dont elle est issue : on ne peut pas retrouver la donnée biométrique à partir de cette empreinte, en tout cas tant que la fonction de hachage utilisée est considérée comme sûre. On peut cependant recalculer l'empreinte à partir de la donnée pour vérifier qu'elle est correcte. L'empreinte de la donnée biométrique peut ainsi être transmise à tout équipement sans dévoiler d'information sur la donnée en elle-même et donc sur la vie privée de l'utilisateur.

Dans un mode de réalisation préféré, le procédé comprend une étape préalable (a0) « d'enrôlement » permettant la mise à disposition de la donnée de référence sur le premier équipement 1. Cette étape peut être mise en oeuvre longtemps avant le reste du procédé, et ne nécessite pas d'être réitérée à chaque occurrence du procédé (on peut par exemple prévoir une fois par an).

Typiquement, cette étape comprend :
∘ La génération par les moyens de traitement de données 11 de l'entité de preuve 1 de la donnée biométrique de référence à partir d'un trait biométrique de référence associé à un document officiel (en particulier un document d'identité tel qu'un passeport ou une carte d'identité), et de l'empreinte cryptographique de la donnée biométrique de référence (toujours par application d'une fonction de hachage donnée) ; et
∘ L'obtention de la signature de la donnée biométrique de référence.

La première partie peut être faite de nombreuses façons. Par exemple, l'utilisateur peut directement récupérer sur son terminal 1 le trait biométrique enregistré dans une puce radiofréquence contenue dans le document (si l'équipement 1 dispose d'un lecteur radiofréquence de type NFC), prendre une photographie de ce document avec ses moyens 14, ou encore une photographie de lui-même, le cas échéant en présence d'un représentant de l'autorité (par exemple à un guichet en mairie).

La deuxième partie, à savoir l'obtention de la signature, nécessite avantageusement de faire valider par l'autorité de contrôle la donnée biométrique générée en tant que donnée de référence.

Ainsi, l'obtention de la signature de la donnée biométrique de référence à l'étape (a0) comprend préférentiellement la transmission à l'entité d'autorité (quatrième équipement 4) du document officiel (ou tout du moins d'une photographie), de la donnée biométrique de référence, et de l'empreinte cryptographique de la donnée biométrique de référence, et la réception en retour de la signature de la donnée biométrique de référence, après vérification.

Cette vérification peut être faite de nombreuses façons, et consiste simplement à vérifier que la donnée biométrique de référence soumise à vérification est bien cohérente avec le document officiel, et que l'empreinte est bien celle de la donnée soumise.

La signature électronique de la donnée permet de garantir son intégrité et ce de façon définitive (non-répudiation), par analogie avec la signature manuscrite d'un document papier, et est bien connue de l'homme du métier. Elle est générée par l'entité d'autorité 4 à partir de l'empreinte cryptographique de la donnée biométrique de référence, et consiste généralement en un chiffré de l'empreinte cryptographique de la donnée biométrique de référence. Pour cela, les moyens de traitement de données 41 de l'entité d'autorité 4 appliquent par exemple une fonction de chiffrement asymétrique à l'empreinte et la retransmettent ainsi chiffrée au premier équipement 1 en tant que signature.

De façon générale, on comprendra que l'étape (a0) pourra être mise en oeuvre de n'importe quelle façon permettant de façon sécurisée de fournir au premier équipement 1 la donnée biométrique de référence signée par une autorité par exemple gouvernementale.

A noter que l'étape (a0) peut également comprendre en outre la fourniture au premier équipement 10 d'une clé cryptographique de l'entité d'autorité 4. Comme l'on verra plus loin, cette clé sécrète servira à initier des communications sécurisées entre les différents équipements 1, 2, 3 lors du procédé d'authentification.

### Obtention de la donnée biométrique candidate

On va maintenant décrire un procédé d'authentification mis en oeuvre par le système 1 décrit ci-avant.

On suppose comme expliqué que le premier équipement 1 dispose d'une donnée biométrique candidate, d'une donnée biométrique de référence, d'une empreinte cryptographique de la donnée biométrique candidate, d'une empreinte cryptographique de la donnée biométrique de référence, et éventuellement d'une signature de la donnée biométrique de référence par une autorité de confiance. Comme expliqué, ces dernières peuvent être obtenues préalablement lors d'une étape (a0) d'enrôlement.

En ce qui concerne la donnée biométrique candidate, « fraîche », celle-ci peut être obtenue lors d'une étape préalable (a1). En d'autres termes, l'entité de preuve 1 peut ne disposer initialement (i.e. à l'issue de l'étape (a0)) que de la donnée biométrique de référence et de l'empreinte cryptographique de la donnée biométrique de référence.

Il est important de comprendre que si l'étape d'enrôlement (a0) peut être mise en oeuvre des semaines avant la mise en oeuvre de l'authentification, l'étape (a1) est au pire mise en oeuvre quelques minutes avant le reste du procédé, pour garantir la « fraicheur » de la donnée biométrique candidate.

L'étape (a1) est mise en oeuvre par les moyens de traitement de données 31 du troisième équipement 3 (l'entité de confiance), et comprend tout d'abord la génération de la donnée biométrique candidate à partir d'un trait biométrique fourni par des moyens d'acquisition biométrique 34 de l'entité de confiance 3. En d'autres termes, l'utilisateur de l'équipement 1 utilise un dispositif automatique fourni par les autorités de contrôle (dans l'aéroport) pour extraire la donnée biométrique candidate.

L'empreinte cryptographique de la donnée biométrique candidate obtenue est ensuite générée ; et enfin l'entité de confiance transmet :
∘ à l'entité de preuve 1, au moins la donnée biométrique candidate obtenue et optionnellement l'empreinte cryptographique générée de la donnée biométrique candidate (en effet, l'entité de preuve peut elle-même la générer) ; et
∘ à l'entité de vérification 2, (seulement) l'empreinte cryptographique générée de la donnée biométrique candidate, à des fins de vérification ultérieure.

On note qu'alternativement l'étape (a1) peut être mise en oeuvre par l'entité de preuve 1, i.e. utilisateur peut utiliser un trait biométrique fourni par les moyens d'acquisition biométrique 14 de son propre équipement 1, mais utiliser l'entité de confiance 3 est préféré de sorte à éviter que l'utilisateur « falsifie » la biométrie en mettant par exemple un masque. A ce titre, de façon préférée les moyens d'acquisition biométrique 34 sont capable de détecter le vivant, de sorte à s'assurer que la donnée biométrique candidate est issue d'un trait « réel ».

A noter que cette étape (a1) peut comprendre l'initiation d'une communication sécurisée entre l'entité de preuve 1 et l'entité de confiance, en particulier avec l'éventuelle clé cryptographique de l'entité d'autorité 4 obtenue lors de l'étape (a0).

Par ailleurs il est préférentiellement prévu que la donnée biométrique candidate est effacée de l'entité de confiance 3 une fois transmise à l'entité de preuve 1, par sécurité.

### Procédé d'authentification

Le présent procédé est non-interactif, c'est-à-dire qu'il ne nécessite qu'un « aller » d'information de l'entité de preuve 1 vers l'entité de vérification 2, et pas de « retour ». Et surtout comme expliqué, l'entité de vérification ne va recevoir ni la donnée biométrique candidate ni la donnée biométrique de référence (ni aucune donnée permettant de remonter jusqu'à ces dernières), bien qu'il soit pourtant possible pour l'entité de validation de savoir avec certitude si les données biométriques candidate et de référence coïncident.

Pour cela, on utilise un protocole cryptographique générant une « preuve » que la donnée biométrique candidate et la donnée biométrique de référence coïncident, cette preuve ne révélant rien d'autre que le fait que ces données biométriques sont bien possédées par le producteur de la preuve.

Le protocole Pinocchio présenté dans la publication « Bryan Parno, Craig Gentry, Jon Howell, and Mariana Raykova, Pinocchio: Nearly Practical Verifiable Computation, in Proceedings of the IEEE Symposium on Security and Privacy, IEEE, 21 May 2013 » a été un des premiers protocoles de calcul vérifiable permettant à l'exécutant de calculer de manière vérifiable l'application d'une fonction quelconque et au donneur d'ordre de vérifier la preuve associée en un temps de calcul inférieur à celui nécessaire pour réaliser le calcul lui-même.

Dans une première étape (a), les moyens de traitement de données 11 de l'entité de preuve 1 génèrent pour cela d'une preuve à divulgation nulle de connaissances du fait que la donnée biométrique candidate et la donnée biométrique de référence coïncident.

Plus précisément, ladite preuve à divulgation nulle de connaissances garantit l'affirmation suivante : « étant données deux empreintes cryptographiques, il existe une donnée biométrique candidate et une donnée biométrique de référence ayant pour empreintes cryptographiques respectives les empreintes cryptographiques données, et coïncidant ».

Ainsi, on peut lier les deux empreintes cryptographiques aux données biométriques candidate et de référence mais on ne peut pas obtenir d'informations sur le contenu de ces données biométriques. Le protocole cryptographique donne une preuve rapide à vérifier (moins d'une demi-seconde) et qu'on ne peut pas falsifier : il est quasi impossible (probabilité inférieure à 1/2⁸⁰, voire inférieur à 1/2¹²⁸ selon les paramètres choisis pour réaliser la preuve, celle-ci étant alors plus lente à réaliser) de faire accepter une preuve de l'affirmation ci-dessus si le processus ne s'est pas déroulé conformément à ce qui est spécifié.

Dans la réalisation de la preuve, l'entité de preuve 1 utilise la possibilité de réaliser des preuves à divulgation nulle de connaissance pour cacher les données biométriques. Ainsi la preuve ne donne aucune information sur les données biométriques elles-mêmes.

Naturellement, l'étape (a) comprend avantageusement la vérification préalable que la donnée biométrique candidate et la donnée biométrique de référence coïncident (toujours sur l'entité de preuve 1, c'est-à-dire le terminal personnel de l'utilisateur), en comparant la donnée biométrique candidate et la donnée biométrique de référence.

En effet, de façon connue, la donnée biométrique candidate et la donnée biométrique de référence coïncident si leur distance selon une fonction de comparaison donnée est inférieure à un seuil prédéterminé.

Ainsi, la mise en oeuvre de la comparaison comprend le calcul d'une distance entre les données, dont la définition varie en fonction de la nature des données biométriques considérées. Le calcul de la distance comprend le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individu, il est courant d'utiliser la distance euclidienne.

Ce type de comparaison est connu de l'Homme du Métier et ne sera pas décrit plus en détails ci-avant.

L'individu est authentifié si la comparaison révèle un taux de similarité entre la donnée candidate et la donnée de référence excédant un certain seuil, dont la définition dépend de la distance calculée.

La preuve est alors plus précisément une preuve à divulgation nulle de connaissances du fait qu'étant données deux empreintes cryptographiques, il existe une donnée biométrique candidate et une donnée biométrique de référence ayant pour empreintes cryptographiques respectives les empreintes cryptographiques données, telles que leur distance selon la fonction de comparaison donnée est inférieure au seuil prédéterminé.

### Génération de preuve

De façon préférée, ladite preuve à divulgation nulle de connaissances est un objet cryptographique de type zkSNARK.

zkSNARK signifie « zero-knowledge Succinct Non Interactive ARgument of Knowledge », i.e. Argument de connaissance non interactive à divulgation nulle de connaissances. Il s'agit d'une primitive cryptographique construite autour de la notion de preuve. Les chercheurs en informatique théorique et en cryptographie se sont intéressés depuis longtemps à la notion de preuve. Il existe des résultats théoriques permettant de produire une preuve très courte et sécurisée d'un algorithme mais le temps pour réaliser cette preuve est hors de portée et le restera malgré l'augmentation de la puissance de calcul des ordinateurs. Une des raisons tient au pouvoir que l'on donne à l'entité qui réalise la preuve, l'entité de preuve 1 (appelée aussi le prouveur). Dans les résultats théoriques sur les preuves, le prouveur a une puissance de calcul infinie et les preuves restent sécurisées malgré cela.

La notion de preuve a ensuite été relâchée, le protocole ne cherchant à se protéger que d'un prouveur qui aurait une puissance de calcul importante mais bornée. Le résultat du protocole n'est plus une preuve mais un argument. C'est à partir de cette notion d'argument que les systèmes pratiques de calcul vérifiables se sont construits. Une exigence supplémentaire dans un système produisant un argument est que cet argument soit non interactif : le vérifieur et le prouveur n'ont pas besoin d'interagir pour produire l'argument.

Depuis 2010, des réalisations de zkSNARKs ont été présentées : il s'agit d'arguments dont la taille est courte (quelques éléments d'une courbe elliptique), qui ne nécessitent pas d'interactivité et qui de plus permettent au prouveur d'effectuer une preuve à divulgation nulle de connaissance i.e. la preuve ne contient aucune information non triviale sur les entrées fournies par le prouveur.

Il existe plusieurs protocoles qui réalisent concrètement des zkSNARKs, et l'homme du métier pourra les utiliser indifféremment dans le présent procédé :
- Le protocole Pinocchio déjà évoqué ;
- Le protocole Gepetto, présenté dans la publication « Craig Costello, Cedric Fournet, Jon Howell, Markulf Kohlweiss, Benjamin Kreuter, Michael Naehrig, Bryan Parno, and Samee Zahur, Geppetto: Versatile Verifiable Computation, in Proceedings of the IEEE Symposium on Security and Privacy, IEEE, 18 May 2015 », qui est une amélioration de Pinocchio
- Le protocole présenté dans la publication et suivantes « Eli Ben-Sasson, Alessandro Chiesa, Daniel Genkin, Eran Tromer, Madars Virza. SNARKs for C: Verifying Program Executions Succinctly and in Zéro Knowledge. In Proceedings of the 33rd Annual International Cryptology Conférence, CRYPTO '13, pages 90-108, 2013", implémenté open-source sous la forme d'une librairie appelée libsnark, optimisant le protocole produisant un zkSNARK dans Pinocchio en améliorant l'expressivité, c'est-à-dire le type de programmes ou d'algorithme qu'il est possible de vérifier.

Pour prendre l'exemple du protocole Pinocchio, ce protocole comporte plusieurs parties :
1. Un programme classique est traduit sous la forme d'un circuit arithmétique, c'est-à-dire d'un ensemble de relations entre les entrées et les sorties du programme traduites uniquement à l'aide d'additions et de multiplications d'éléments d'un corps fini. Il faut remarquer que tous les programmes peuvent en théorie être traduits sous cette forme mais qu'une partie seulement de ces programmes admet une traduction efficace sous forme de circuit.
2. Le circuit arithmétique obtenu est représenté efficacement à l'aide de trois familles de polynômes auxquelles s'ajoute un polynôme supplémentaire, appelé polynôme cible. Ces familles de polynômes forment des « Quadratic Arithmetic Programs » (QAPs). Elles encodent les relations entre les entrées et les sorties de chaque porte multiplicative du circuit, les relations des portes additives étant intégrées dans la première porte multiplicative qui suit dans le calcul.

Ces QAPs sont reliés au calcul vérifiable par le point suivant : un calcul y = C(x) est correct pour une entrée x si et seulement si toutes les relations décrivant le circuit arithmétique correspondant sont satisfaites en fixant comme valeur d'entrée x et comme valeur de sortie y.

Les QAPs permettent en quelque sorte de compresser toutes les contraintes à vérifier dans une seule relations à vérifier : un polynôme construit à partir de la valeur x et des trois familles du QAP doit diviser le polynôme cible.

3. Un protocole cryptographique prend alors en entrée un QAP associé à un programme, génère des clés d'évaluation et de vérification qui utilisent des courbes elliptiques pour cacher les relations polynômiales. Le polynôme prouvant que le calcul a été effectué correctement est alors calculé directement à l'aide des relations cachées dans la courbe elliptique. La relation de divisibilité se traduit uniquement à l'aide d'un nombre constant d'éléments de la courbe elliptique, c'est-à-dire que la preuve est de taille constante. La vérification de cette preuve est extrêmement rapide.

Le protocole permet de plus d'obtenir que des entrées du calcul fournies par le prouveur soient privées : il permet de cacher les valeurs du prouveur dans la réalisation de la preuve en les multipliant par un multiple du polynôme cible, ce qui ne modifie pas le fait que le polynôme « preuve » soit divisible par le polynôme cible.

Ce polynôme « preuve », quand il est caché dans une courbe elliptique constitue un zkSNARK.

Le protocole Pinocchio permet à celui qui réalise la preuve de cacher certaines des entrées du calcul dont il fait la preuve. Dans le présent cas, il s'agit de réaliser le calcul suivant :
Entrée : les empreintes cryptographiques de la donnée biométrique candidate *h_{fresh}* = *H*(*t_{fresh}*) et de référence *h_{ref}* = *H*(*t_{ref}*), le résultat de la comparaison des données biométriques candidate *t_{fresh}* et de référence *t_{ref}* (i.e. le booléen selon qu'elles coïncident ou non), et un vecteur d'initialisation IV
Entrée privée : les données biométriques candidate *t_{fresh}* et de référence *t_{ref}.*
Sortie : la preuve π que le prouveur connaît bien des données biométriques *t_{fresh}* et *t_{ref}* qui se hachent en *h_{fresh}* et *h_{ref}* et dont le résultat de la comparaison est celui attendu.

A noter que sont connus des protocoles prévus pour la génération d'une preuve de bon déroulement d'une fonction de hachage, que l'homme du métier pourra directement utiliser même s'ils ne sont pas optimaux. La difficulté est d'obtenir un temps de calcul raisonnable pour réaliser la preuve et des tailles de clés d'évaluation et de vérification qui ne sont pas trop conséquentes.
- le protocole Zerocash (IEEE Security & Privacy 2014) de Ben-Sasson et al., propose la définition d'un circuit arithmétique pour vérifier la fonction de compression de SHA-256 qui comporte environ 30 000 portes multiplicatives. Ceci donne un temps de réalisation de preuve d'environ 5 secondes (par niveau de compression, vérifier la fonction de hachage entière qui comprend de nombreuses itérations de la fonction de compression sera nettement plus long), ce qui reste élevé et largement améliorable ;
- le protocole ZKBoo, présenté dans la publication « ZKBoo : faster zero-knowledge for boolean circuits » de Giacomelli, Madsen et Orlandi (Usenix Security 2016) » permet de meilleures performances (preuve en 50 ms, vérification en 70 ms) par itération de la fonction de compression, mais la taille de la preuve est conséquente (800 Ko) d'autant plus qu'elle ne semble avoir été mesurée que sur une application de la fonction de compression.

Dans le mode de réalisation préféré du « couloir » représenté à la figure 2, il est préféré un système de preuve légère mais dont la génération prend quelques secondes, dans la mesure où ce sera le temps de parcours de l'utilisateur, cette attente ne le gênant donc pas et étant pour lui un gage de qualité du traitement et de sécurité.

### Suite du procédé

Dans une étape (b), l'entité de preuve 1 transmet à l'entité de vérification 2 ladite preuve à divulgation nulle de connaissance, l'empreinte cryptographique de la donnée biométrique candidate, et l'empreinte cryptographique de la donnée biométrique de référence. Eventuellement, la signature de la donnée biométrique de référence est également transmise si l'entité de preuve 1 en dispose, mais aucune autre donnée n'est transmise (i.e. on transmet uniquement l'empreinte cryptographique de la donnée biométrique candidate, l'empreinte cryptographique de la donnée biométrique de référence, et la signature de la donnée biométrique de référence). On répète que les données biométriques ne sont quant à elles pas transmises.

Comme précédemment, une communication sécurisée peut être initiée entre les deux équipements au moyen de l'éventuelle clé fournie lors de l'étape (a0).

Dans une étape (c), les moyens de traitement de données 21 de l'entité de vérification 2 vérifie que la preuve à divulgation nulle de connaissance est valide, et que l'empreinte cryptographique reçue de la donnée biométrique candidate correspond à celle dont dispose l'entité de vérification 2 (en d'autres termes que la donnée candidate que l'on a utilisée est bien la donnée fraîche extraite juste avant avec les moyens d'acquisition biométrique 34).

Si c'est le cas, l'utilisateur est authentifié, et d'autres actions comme l'ouverture de la porte automatique P peuvent survenir (voir plus loin).

Si la donnée de référence est signée par l'entité d'autorité 4 (i.e. l'entité de preuve 1 dispose également de la signature électronique de la donnée biométrique de référence, typiquement un chiffré de son empreinte cryptographique), l'étape (b) peut comprendre en outre comme expliqué la transmission à l'entité de vérification 2 de la signature de la donnée biométrique de référence, et l'étape (c) comprend alors préférentiellement la vérification que la signature électronique de la donnée biométrique de référence est valide, notamment avec une clé de l'autorité fournie à l'entité de vérification 2.

Plus précisément, l'entité de vérification 2 va déchiffrer la signature avec cette clé, et vérifier que le résultat est bien l'empreinte cryptographique par ailleurs transmise.

La vérification de la preuve à l'étape (c) n'est pas interactive (l'entité de vérification 2 n'a pas besoin de contacter le prouveur, i.e. l'entité de preuve 1) et se fait simplement en temps constant en vérifiant que la preuve est valide, ce qui démontre (à une probabilité infime près) à l'entité de vérification 2 que la propriété prétendue est vraie, i.e. que l'utilisateur dispose d'une donnée biométrique candidate et d'une donnée biométrique de référence qui coïncident. Il se convainc ainsi que l'identité de l'utilisateur est confirmée (et que personne n'a usurpé une identifié) malgré l'absence de donnée biométrique.

Grâce à la preuve la confidentialité peut être totale (puisque la génération de la preuve ne nécessite pas de communication) sans que l'entité de vérification 2 ne prenne de risque puisque la preuve lui garantit que l'entité de preuve dispose bien des données biométriques.

La preuve est courte (voir très courte - de l'ordre de quelques centaines d'octets), la transmettre avec les empreintes cryptographiques du document ne pose aucun problème de bande passante. De plus, la vérification de cette preuve est rapide (en temps constant, quelques dizaines de millièmes de secondes), ce qui n'augmente pas la charge de calcul au niveau des moyens de traitement de données 21 de l'entité de vérification 2, qui doit gérer des centaines d'authentifications simultanées. La génération de la preuve est quant à elle plus lourde en termes de temps de calcul, mais comme l'étape (a) est mise en oeuvre du côté premier équipement 1 qui est personnel (et n'est impliqué que dans l'authentification de son seul propriétaire), ce temps de calcul additionnel n'est pas problématique, et même bien accueilli par les utilisateurs qui n'ont pas de problème à consacrer quelques dizaines de secondes du temps de fonctionnement de leur terminal personnel si c'est pour éviter de faire la queue à des guichets.

Ainsi le présent procédé est optimal aussi bien pour l'utilisateur que pour le prestataire (l'aéroport, la douane, etc.).

### Couloir

Dans le mode de réalisation préféré du couloir C, l'utilisateur a uniquement à lancer une application dédiée sur son terminal 1 à l'entrée du couloir C, tout le reste étant fait automatiquement et de façon transparente, ce qui est très agréable pour l'utilisateur.

Au lancement, la connexion sécurisée avec l'entité de confiance 3 est établie. A partir de là, il peut être prévu que les moyens d'acquisition biométrique 34 sont un ensemble de caméras disposées sur les parois et observant tous les visages. Ainsi, rien qu'en marchant dans le couloir l'utilisateur est filmé, et la donnée biométrique candidate est générée par l'entité de confiance 3 et chargée sur son terminal 1, qui réalise alors automatiquement la comparaison et génère la preuve alors qu'il continue de marcher.

Alors, la connexion sécurisée avec l'entité de vérification 2 est initiée, et lui sont transmises la preuve et les deux empreintes cryptographiques, pour vérification. Si celle-ci est concluante, la porte P s'ouvre.

A noter qu'un agent de sécurité peut être disposé au niveau de la porte pour vérifier encore la fraicheur des données biométriques candidates. Par exemple il peut être prévu que sur une interface homme machine 33 de l'entité de confiance 3 s'affichent les données biométriques candidates générées par l'entité de confiance 3, de sorte à ce que l'agent de sécurité vérifie que personne ne porte un masque et puisse vérifier que les personnes qui franchissent la porte sont bien celles authentifiées.

Si l'on veut maximiser la sécurité, on peut prévoir que les individus ne peuvent franchir la porte qu'un à un, l'agent de sécurité observant leur visage à tour de rôle, mais si l'on veut augmenter le débit on peut tout simplement prévoir que le système se « verrouille » en cas d'anomalie (par exemple une preuve non valide est reçue, ou si les empreintes cryptographiques diffèrent) jusqu'à ce que l'agent de sécurité isole et contrôle l'individu responsable.

### Ensemble d'équipements

Selon un deuxième aspect, est proposé un ensemble de traitement de données biométriques pour la mise en oeuvre du procédé selon le premier aspect.

L'ensemble comprenant une entité de preuve 1 (premier équipement) une entité de vérification 2 (deuxième équipement) connectées, et le cas échant, une entité de confiance 3 (troisième équipement) et/ou une entité d'autorité 4 (quatrième équipement).

L'entité de preuve 1, qui est typiquement un dispositif personnel de l'utilisateur comme un smartphone, comprend des moyens de traitement de données 11 configurés pour générer une preuve à divulgation nulle de connaissances du fait qu'une donnée biométrique candidate et une donnée biométrique de référence coïncident, et transmettre à l'entité de vérification 2 ladite preuve à divulgation nulle de connaissance, une empreinte cryptographique de la donnée biométrique candidate, et une empreinte cryptographique de la donnée biométrique de référence (et éventuellement une signature de la donnée biométrique de référence).

Les moyens de traitement de données 11 peuvent en outre être configurés pour générer la donnée biométrique de référence à partir d'un trait biométrique de référence associé à un document officiel, et l'empreinte cryptographique de la donnée biométrique de référence.

L'entité de vérification 2 quant à elle ne dispose préférentiellement jamais des données biométriques de référence ou candidate, et seulement d'une empreinte cryptographique de la donnée biométrique candidate.

Elle comprend des moyens de traitement de données 21 configurés pour vérifier que la preuve à divulgation nulle de connaissance reçue est valide, et que l'empreinte cryptographique reçue de la donnée biométrique candidate correspond à une dont dispose l'entité de vérification 2. Ils peuvent également être configurés pour vérifier que la signature électronique de la donnée biométrique de référence est valide.

L'entité de confiance 3 comprend des moyens d'acquisition biométrique 34 et des moyens de traitement de données 31.

Ces derniers sont configurés pour :
∘ générer la donnée biométrique candidate à partir d'un trait biométrique fourni par les moyens d'acquisition biométrique 34 et l'empreinte cryptographique de la donnée biométrique candidate obtenue ;
∘ transmettre :
   ▪ à l'entité de preuve 1, au moins la donnée biométrique candidate obtenue (et généralement l'empreinte cryptographique de la donnée biographique candidate) ; et
   ▪ à l'entité de vérification 2, (seulement) l'empreinte cryptographique générée de la donnée biométrique candidate.

L'entité d'autorité 4 comprend et des moyens de traitement de données 41 configurés pour générer sur requête de l'entité de preuve 1 une signature de la donnée biométrique de référence (i.e. un chiffré de l'empreinte cryptographique de la donnée biométrique de référence).

### Produit programme d'ordinateur

Selon un troisième et un quatrième aspects, l'invention concerne un produit programme d'ordinateur comprenant des instructions de code pour l'exécution (en particulier sur les moyens de traitement de données 11, 21, 31, 41 des entités 1, 2, 3, 4) d'un procédé selon le premier aspect de l'invention de traitement de données biométriques, ainsi que des moyens de stockage lisibles par un équipement informatique (une mémoire des entités 1, 2, 3, 4) sur lequel on trouve ce produit programme d'ordinateur.

## Revendications

1. Procédé de traitement de données biométriques mis en œuvre par une entité de preuve (1) et une entité de vérification (2) connectées ;
l'entité de preuve (1) disposant d'une donnée biométrique candidate, d'une donnée biométrique de référence, d'une empreinte cryptographique de la donnée biométrique de référence, d'une empreinte cryptographique de la donnée biométrique candidate ; l'entité de vérification (2) disposant seulement de l'empreinte cryptographique de la donnée biométrique candidate ;
le procédé comprenant des étapes de :
(a) génération par les moyens de traitement de données (11) de l'entité de preuve (1) d'une preuve à divulgation nulle de connaissances du fait que, étant données deux empreintes cryptographiques, il existe une donnée biométrique candidate et une donnée biométrique de référence :
- ayant pour empreintes cryptographiques respectives les empreintes cryptographiques données, et
- coïncidant ;
(b) transmission par l'entité de preuve (1) à l'entité de vérification (2) de ladite preuve à divulgation nulle de connaissance, de l'empreinte cryptographique de la donnée biométrique candidate, et de l'empreinte cryptographique de la donnée biométrique de référence ;
(c) vérification par les moyens de traitement de données (21) de l'entité de vérification (2) que la preuve à divulgation nulle de connaissance reçue de l'entité preuve (1) est valide à l'aide des empreintes cryptographiques reçues de l'entité de preuve (1), et que l'empreinte cryptographique reçue de l'entité de preuve (1) de la donnée biométrique candidate correspond à celle dont dispose l'entité de vérification (2).

2. Procédé selon la revendication 1, dans lequel l'entité de preuve (1) ne dispose initialement que de la donnée biométrique de référence et de l'empreinte cryptographique de la donnée biométrique de référence, le procédé comprenant la mise en oeuvre par des moyens de traitement de données (31) d'une entité de confiance (3) d'une étape préalable (a1) de :
∘ génération de la donnée biométrique candidate à partir d'un trait biométrique fourni par des moyens d'acquisition biométrique (34) de l'entité de confiance (3) ;
∘ génération de l'empreinte cryptographique de la donnée biométrique candidate obtenue ; et
∘ transmission :
▪ à l'entité de preuve (1), d'au moins la donnée biométrique candidate obtenue ; et
▪ à l'entité de vérification (2), de l'empreinte cryptographique générée de la donnée biométrique candidate.

3. Procédé selon l'une des revendications 1 et 2, comprenant une étape (d) d'ouverture d'une porte (P) disposée à une extrémité d'un couloir (C), les moyens d'acquisition biométrique (34) de l'entité de confiance (3) étant disposés à l'autre extrémité du couloir (C), de sorte que les étapes (a) et (b) soient mises en œuvre pendant le parcours du couloir (C) par l'utilisateur de l'entité de preuve (1).

4. Procédé selon l'une des revendications 1 à 3, dans lequel l'entité de preuve (1) dispose également d'une signature électronique de la donnée biométrique de référence par une entité d'autorité (4), l'étape (b) comprenant en outre la transmission à l'entité de vérification (2) de la signature de la donnée biométrique de référence, et l'étape (c) comprenant en outre la vérification que la signature de la donnée biométrique de référence est valide.

5. Procédé selon la revendication 4, comprenant une étape encore antérieure (a0) de :
∘ génération par les moyens de traitement de données (11) de l'entité de preuve (1) de la donnée biométrique de référence à partir d'un trait biométrique de référence associé à un document officiel ; et de l'empreinte cryptographique de la donnée biométrique de référence ;
∘ obtention de la signature de la donnée biométrique de référence.

6. Procédé selon la revendication 5, dans lequel l'obtention de la signature de la donnée biométrique de référence à l'étape (a0) comprend la transmission à l'entité d'autorité (4) du document officiel, de la donnée biométrique de référence, et de l'empreinte cryptographique de la donnée biométrique de référence, et la réception en retour de la signature de la donnée biométrique de référence générée par l'entité d'autorité à partir de l'empreinte cryptographique de la donnée biométrique de référence, après vérification.

7. Procédé selon l'une des revendications 1 à 6, dans lequel la preuve à divulgation nulle de connaissances est un objet cryptographique de type zkSNARK.

8. Procédé selon l'une des revendications 1 à 7, dans lequel l'étape (a) comprend la vérification préalable que la donnée biométrique candidate et la donnée biométrique de référence coïncident.

9. Procédé selon la revendication 8, dans lequel la donnée biométrique candidate et la donnée biométrique de référence coïncident si leur distance selon une fonction de comparaison donnée est inférieure à un seuil prédéterminé.

10. Procédé selon la revendication 9, dans lequel ladite preuve à divulgation nulle de connaissances du fait que la donnée biométrique candidate et la donnée biométrique de référence coïncident est une preuve à divulgation nulle de connaissances du fait qu'étant données deux empreintes cryptographiques, il existe une donnée biométrique candidate et une donnée biométrique de référence ayant pour empreintes cryptographiques respectives les empreintes cryptographiques données, telles que leur distance selon la fonction de comparaison donnée est inférieure au seuil prédéterminé.

11. Procédé selon l'une des revendications 1 à 10, dans lequel l'entité de preuve (1) est un dispositif électronique personnel à l'individu de type téléphone, ordinateur personnel ou tablette numérique.

12. Ensemble de traitement de données biométriques comprenant une entité de preuve (1) et une entité de vérification (2) connectées, **caractérisé en ce que** :
∘ l'entité de preuve (1) comprend des moyens de traitement de données (11) configurés pour générer une preuve à divulgation nulle de connaissances du fait que étant données deux empreintes cryptographiques, il existe une donnée biométrique candidate et une donnée biométrique de référence ayant pour empreintes cryptographiques respectives les empreintes cryptographiques données, et coïncidant ; et transmettre à l'entité de vérification (2) ladite preuve à divulgation nulle de connaissance, une empreinte cryptographique de la donnée biométrique candidate, et une empreinte cryptographique de la donnée biométrique de référence ;
∘ l'entité de vérification (2) comprend des moyens de traitement de données (21) configurés pour vérifier que la preuve à divulgation nulle de connaissance reçue de l'entité de preuve (1) est valide à l'aide des empreintes cryptographiques reçues de l'entité preuve (1), et que l'empreinte cryptographique reçue de l'entité de preuve (1) de la donnée biométrique candidate correspond à celle dont dispose l'entité de vérification (2).

13. Ensemble selon la revendication 12, comprenant en outre une entité de confiance (3) comprenant des moyens d'acquisition biométrique (34) et des moyens de traitement de données (31) configurés pour :
∘ générer la donnée biométrique candidate à partir d'un trait biométrique fourni par les moyens d'acquisition biométrique (34) et l'empreinte cryptographique de la donnée biométrique candidate obtenue ;
∘ transmettre :
▪ à l'entité de preuve (1), au moins la donnée biométrique candidate obtenue ; et
▪ à l'entité de vérification (2), l'empreinte cryptographique générée de la donnée biométrique candidate.

14. Ensemble selon l'une des revendications 12 et 13, comprenant en outre une entité d'autorité (4) comprenant des moyens de traitement de données (41) configurés pour signer sur requête de l'entité de preuve (1) l'empreinte cryptographique de la donnée biométrique de référence.

15. Produit programme d'ordinateur comprenant des instructions de code, lesdites instructions de code lorsqu'elles sont exécutées par un ordinateur, conduisant à mettre en œuvre le traitement de données biométriques selon l'une des revendications 1 à 11 en tant que l'entité de preuve ou l'entité de vérification.

16. Moyen de stockage lisible par un équipement informatique sur lequel est enregistré un produit programme d'ordinateur selon la revendication 15.

## Patentansprüche

1. Verfahren zur Verarbeitung von biometrischen Daten, das von einer Beweisentität (1) und einer Verifikationsentität (2) umgesetzt wird, welche verbunden sind;
wobei die Beweisentität (1) über biometrische Kandidatendaten, biometrische Referenzdaten, einen Hashwert der biometrischen Referenzdaten, einen Hashwert der biometrischen Kandidatendaten verfügt; wobei die Verifikationsentität (2) nur über den Hashwert der biometrischen Kandidatendaten verfügt;
wobei das Verfahren Schritte umfasst des:
(a) Erzeugens, durch die Datenverarbeitungsmittel (11) der Beweisentität (1) eines kenntnisfreien Beweises der Tatsache, dass, wenn zwei Hashwertz gegeben sind, biometrische Kandidatendaten und biometrische Referenzdaten existieren, die:
- als jeweilige Hashwerte die gegebenen Hashwerte besitzen, und
- übereinstimmen;
(b) Übertragens des kenntnisfreien Beweises, des Hashwerts der biometrischen Kandidatendaten und des Hashwerts der biometrischen Referenzdaten durch die Beweisentität (1) an die Verifikationsentität (2);
(c) Verifizierens, durch die Datenverarbeitungsmittel (21) der Verifikationsentität (2) mithilfe der von der Beweisentität (1) empfangenen Hashwerte, dass der von der Beweisentität (1) empfangene kenntnisfreie Beweis gültig ist, und dass der von der Beweisentität (1) empfangene Hashwert der biometrischen Kandidatendaten demjenigen entspricht, über den die Verifikationsentität (2) verfügt.

2. Verfahren nach Anspruch 1, wobei die Beweisentität (1) anfangs nur über die biometrischen Referenzdaten und den Hashwert der biometrischen Referenzdaten verfügt, wobei das Verfahren die Umsetzung, durch Datenverarbeitungsmittel (31) einer vertrauenswürdigen Entität (3), eines vorausgehenden Schrittes (a1) umfasst des:
- Erzeugens der biometrischen Kandidatendaten auf Grundlage eines biometrischen Merkmals, das von biometrischen Erfassungsmitteln (34) der vertrauenswürdigen Entität (3) geliefert wird;
- Erzeugens des Hashwerts der erhaltenen biometrischen Kandidatendaten; und
- Übertragens:
-- an die Beweisentität (1), mindestens der erhaltenen biometrischen Kandidatendaten; und
-- an die Verifikationsentität (2), des erzeugten Hashwerts der biometrischen Kandidatendaten.

3. Verfahren nach einem der Ansprüche 1 und 2, das einen Schritt (d) des Öffnens einer Tür (P) umfasst, die an einem Ende eines Gangs (C) angeordnet ist, wobei die biometrischen Erfassungsmittel (34) der vertrauenswürdigen Entität (3) am anderen Ende des Gangs (C) angeordnet sind, sodass die Schritte (a) und (b) umgesetzt werden, während der Benutzer der Beweisentität (1) den Gang (C) durchläuft.

4. Verfahren nach einem der Ansprüche 1 bis 3, wobei die Beweisentität (1) ebenfalls über eine elektronische Signatur der biometrischen Referenzdaten durch eine behördliche Entität (4) verfügt, wobei der Schritt (b) weiter das Übertragen der Signatur der biometrischen Referenzdaten an die Verifikationsentität (2) umfasst, und wobei der Schritt (c) weiter das Verifizieren umfasst, dass die Signatur der biometrischen Referenzdaten gültig ist.

5. Verfahren nach Anspruch 4, das einen noch früheren Schritt (a0) umfasst des:
- Erzeugens der biometrischen Referenzdaten durch die Datenverarbeitungsmittel (11) der Beweisentität (1) auf Grundlage eines biometrischen Referenzmerkmals, das mit einem amtlichen Dokument verknüpft ist; und des Hashwerts der biometrischen Referenzdaten;
- Erhaltens der Signatur der biometrischen Referenzdaten.

6. Verfahren nach Anspruch 5, wobei das Erhalten der Signatur der biometrischen Referenzdaten in Schritt (a0) das Übertragen des amtlichen Dokuments, der biometrischen Referenzdaten und des Hashwerts der biometrischen Referenzdaten an die behördliche Entität (4), und im Gegenzug das Empfangen der Signatur der biometrischen Referenzdaten umfasst, die von der behördlichen Entität nach Verifikation auf Grundlage des Hashwerts der biometrischen Referenzdaten erzeugt wurde.

7. Verfahren nach einem der Ansprüche 1 bis 6, wobei es sich beim kenntnisfreien Beweis um ein kryptografisches Objekt vom Typ zkSNARK handelt.

8. Verfahren nach einem der Ansprüche 1 bis 7, wobei der Schritt (a) das vorausgehende Verifizieren umfasst, dass die biometrischen Kandidatendaten und die biometrischen Referenzdaten übereinstimmen.

9. Verfahren nach Anspruch 8, wobei die biometrischen Kandidatendaten und die biometrischen Referenzdaten übereinstimmen, wenn ihr Abstand lt. einer gegebenen Vergleichsfunktion kleiner als eine vorbestimmte Schwelle ist.

10. Verfahren nach Anspruch 9, wobei es sich bei dem kenntnisfreien Beweis der Tatsache, dass die biometrischen Kandidatendaten und die biometrischen Referenzdaten übereinstimmen, um einen kenntnisfreien Beweis der Tatsache handelt, dass, wenn zwei Hashwerte gegeben sind, biometrische Kandidatendaten und biometrische Referenzdaten existieren, die als jeweilige Hashwerte die gegebenen Hashwerte besitzen, wobei ihr Abstand lt. der gegebenen Vergleichsfunktion kleiner als die vorbestimmte Schwelle ist.

11. Verfahren nach einem der Ansprüche 1 bis 10, wobei es sich bei der Beweisentität (1) um eine persönliche elektronische Vorrichtung der Person vom Typ Telefon, PC oder digitales Tablet handelt.

12. Einheit zur Verarbeitung von biometrischen Daten, die eine Beweisentität (1) und eine Verifikationsentität (2) umfasst, welche verbunden sind, **dadurch gekennzeichnet, dass**:
- die Beweisentität (1) Datenverarbeitungsmittel (11) umfasst, die so ausgelegt sind, dass sie einen kenntnisfreien Beweis der Tatsache erzeugen, dass, wenn zwei Hashwerte gegeben sind, biometrische Kandidatendaten und biometrische Referenzdaten existieren, die als jeweilige Hashwerte die gegebenen Hashwerte besitzen und übereinstimmen; und den kenntnisfreien Beweis, einen Hashwert der biometrischen Kandidatendaten und einen Hashwert der biometrischen Referenzdaten an die Verifikationsentität (2) übertragen;
- die Verifikationsentität (2) Datenverarbeitungsmittel (21) umfasst, die so ausgelegt sind, dass sie mithilfe der von der Beweisentität (1) empfangenen Hashwerte verifizieren, dass der von der Beweisentität (1) empfangene kenntnisfreie Beweis gültig ist, und dass der von der Beweisentität (1) empfangene Hashwert der biometrischen Kandidatendaten demjenigen entspricht, über den die Verifikationsentität (2) verfügt.

13. Einheit nach Anspruch 12, die weiter eine vertrauenswürdige Entität (3) umfasst, die biometrische Erfassungsmittel (34) und Datenverarbeitungsmittel (31) umfasst, die so ausgelegt sind, dass sie:
- die biometrischen Kandidatendaten auf Grundlage eines biometrischen Merkmals, das von den biometrischen Erfassungsmitteln (34) geliefert wird, und den Hashwert der erhaltenen biometrischen Kandidatendaten erzeugen;
-- an die Beweisentität (1) mindestens die erhaltenen biometrischen Kandidatendaten; und
-- an die Verifikationsentität (2) den erzeugten Hashwert der biometrischen Kandidatendaten
- übertragen.

14. Einheit nach einem der Ansprüche 12 und 13, die weiter eine behördliche Entität (4) umfasst, die Datenverarbeitungsmittel (41) umfasst, die so ausgelegt sind, das sie auf Anfrage der Beweisentität (1) den Hashwert der biometrischen Referenzdaten signieren.

15. Computerprogrammprodukt, das Codeanweisungen umfasst, wobei die Codeanweisungen, wenn sie von einem Computer ausgeführt werden, zur Umsetzung der Verarbeitung von biometrischen Daten nach einem der Ansprüche 1 bis 11 als Beweisentität oder Verifikationsentität führen.

16. Von einer IT-Ausrüstung lesbares Speichermittel, auf dem ein Computerprogrammprodukt nach Anspruch 15 gespeichert ist.

## Claims

1. A method for processing biometric data performed by a connected proof entity (1) and a verification entity (2);
the proof entity (1) having a biometric candidate datum, a biometric reference datum, a hash value of the biometric reference datum, a hash value of the biometric candidate datum; the verification entity (2) having only the hash value of the biometric candidate datum;
the method comprising steps of:
(a) generation by the data-processing unit (11) of the proof entity (1) of a zero-knowledge proof of the assumption that, given two hash values, there is a biometric candidate datum and a biometric reference datum:
- having for respective hash values the given hash values, and
- coinciding;
(b) transmission by the proof entity (1) to the verification entity (2) of said zero-knowledge proof, the hash value of the biometric candidate datum, and the hash value of the biometric reference datum;
(c) verification by a data-processing unit (21) of the verification entity (2) that the zero-knowledge proof received from the proof entity (1) is valid using hash values received from the proof entity (1), and that the hash value received from the proof entity (1) of the biometric candidate datum corresponds to the one the verification entity (2) has.

2. The method according to claim 1, wherein the proof entity (1) initially has only the biometric reference datum and the hash value of the biometric reference datum, the method comprising performing, by a data-processing unit (31) of a trusted entity (3), a prior step (a1) of:
∘ generating the biometric candidate datum from a biometric trait provided by a biometric acquisition unit (34) of the trusted entity (3);
∘ generating the hash value of the biometric candidate datum obtained; and
∘ transmitting to:
▪ the proof entity (1) at least the biometric candidate datum obtained; and
▪ the verification entity (2) the hash value generated from the biometric candidate datum.

3. The method according to one of claims 1 or 2, comprising a step (d) of opening a door (P) arranged at one end of a corridor (C), the biometric acquisition unit (34) of the trusted entity (3) being arranged at the other end of the corridor (C), such that the steps (a) and (b) are conducted as a user of the proof entity (1) travels along the corridor (C).

4. The method according to one of claim 1 to 3, wherein the proof entity (1) also has an electronic signature of the biometric reference datum by an authority entity (4), the step (b) further comprising the transmission to the verification entity (2) of the signature of the biometric reference datum, and the step (c) further comprising the verification that the signature of the biometric reference datum is valid.

5. The method according to claim 4, comprising an even earlier step (a0) of:
o generation by the data-processing unit (11) of the proof entity (1) of the biometric reference datum from a biometric reference trait associated with an official document; and of the hash value of the biometric reference datum;
o obtaining the signature of the biometric reference datum.

6. The method according to claim 5, wherein obtaining the signature of the biometric reference datum at step (a0) comprises transmitting to the authority entity (4) the official document, the biometric reference datum and the hash value of the biometric reference datum, and the return receipt of the signature of the biometric reference datum generated by the authority entity from the hash value of the biometric reference datum, after verification.

7. The method according to one of claims 1 to 6, wherein the zero-knowledge proof is a cryptographic object of zkSNARK type.

8. The method according to one of claims 1 to 7, wherein the step (a) comprises prior verification that the biometric candidate datum and the biometric reference datum coincide.

9. The method according to claim 8, wherein the biometric candidate datum and the biometric reference datum coincide if their distance according to a given comparison function is under a predetermined threshold.

10. The method according to claim 9, wherein said zero-knowledge proof of the assumption that the biometric candidate datum and the biometric reference datum coincide is a zero-knowledge proof of the assumption that, given two hash values, there is a biometric candidate datum and a biometric reference datum having as respective hash values the given hash values, such that their distance is under the predetermined threshold according to the given comparison function.

11. The method according to one of claims 1 to 10, wherein the proof entity (1) is a personal electronic device of telephone, personal computer or digital-tablet type.

12. A system for processing biometric data comprising a connected proof entity (1) and a verification entity (2), **characterized in that**:
o the proof entity (1) comprises a data-processing unit (11) configured to generate a zero-knowledge proof of the assumption that, given two hash values, there is a biometric candidate datum and a biometric reference datum having as respective hash values the given hash values, and coinciding; and to transmit to the verification entity (2) said zero-knowledge proof, a hash value of the biometric candidate datum, and a hash value of the biometric reference datum;
o the verification entity (2) comprises a data-processing unit (21) configured to verify that the zero-knowledge proof received from the proof entity (1) is valid using hash values received from the proof entity (1), and that the hash value received from the proof entity (1) of the biometric candidate datum corresponds to the one the verification entity (2) has.

13. The system according to claim 12, further comprising a trusted entity (3) comprising a biometric acquisition unit (34) and a data-processing unit (31) configured to:
∘ generate the biometric candidate datum from a biometric trait provided by the biometric acquisition unit (34) and the hash value of the biometric candidate datum obtained;
∘ transmit to:
▪ the proof entity (1), at least the biometric candidate datum obtained; and
▪ the verification entity (2), the hash value generated from the biometric candidate datum.

14. The system according to one of claims 12 and 13, further comprising an authority entity (4) comprising a data-processing unit (41) configured to sign the hash value of the biometric reference datum on request of the proof entity (1).

15. A computer program product comprising code instructions, said code instructions when they are executed by a computer, leading to implement the processing of biometric data according to one of claims 1 to 11 as the proof entity or the verification entity.

16. A means of storage readable by a computer on which a computer program product is recorded according to claim 15.
